# EUROPEAN PATENT APPLICATION

(11) **EP 2 455 629 A1**
(43) Date of publication of application: **23.05.2012**
(21) Application number: 10191883.7
(22) Date of filing: 19.11.2010
(51) Int. Cl.: F16C 17/12

(54) **Radial gas foil bearing**

(71) Applicant: SIEMENS AKTIENGESELLSCHAFT, 80333 München (DE)
(72) Inventor: Larsen, Jon Steffen, 2850, Dänemark (DK); Lyquist, Joergen, 3140, Alsgarde (DK)

(57) **Abstract**

The invention relates to a radial gas foil bearing (RGFB) comprising a carrier element (CE) provided with a basically round opening (OP) for radially surrounding a shaft (SH) extending in an axial direction (AX) to be supported radially by the radial gas foil bearing (RGFB), wherein the opening (OP) comprises a basically circumferentially extending inner surface (IS) facing a radial centre (CE) of the opening (OP), which inner surface (IS) is provided with a layer system (LS) comprising a bump foil layer (BFL) and a flat surface layer (FSL) both layers (BFL, FSL) extending in a circumferential direction (CD) from a first circumferential end (FCE) to a second circumferential end (SCE), wherein the bump foil layer (BFL) is provided with first protrusions (FPRO) contacting the radially outwards adjacent element and second protrusions (SPRO) contacting a radially inwards adjacent element. To improve the conventional gas foil bearing and to increase the capacity to cope with dynamic forces from the rotor especially at high speeds at least two layer systems (LS) are provided in serial order in radial direction (RD).

## Description

The invention refers to a radial gas foil bearing comprising a carrier element provided with a basically round opening for surrounding a shaft extending in an axial direction to be supported by the radial gas foil bearing, wherein the opening comprises a basically circumferentially extending inner surface facing the centre of the opening, which inner surface is provided with a layer system comprising a bump foil layer and a flat surface layer both extending in a circumferential direction from a first circumferential end to a second circumferential end, wherein the bump foil layer is provided with first protrusions contacting the inner surface and second protrusions contacting a radially outer surface of the first flat surface layer.

Gas foil bearings can be used for various machine types to support shafts rotating at high speeds. A preferred application of the gas foil bearings according to the invention are radial bearings for a compressor rotating preferably at speeds between 10000 and 50000 RPM.

In this field of technology several bearings types are known, for example oil lubricated radial ball bearings, oil lubricated journal bearings, active magnetic bearings and gas foil bearings. The invention deals with the latter. The gas foil bearing comprises normally a thin smooth radially inner surface layer and a bump foil radially outer surface layer, which allows for damping and thermal growth, centrifugal growth and compensation of miss-alignment of the shaft especially during high speed operation. Conventional gas foil bearings often can not cope with rotor dynamic unstable turbo machinery resulting in excessive rotor vibrations. This can be a major problem for an especially radial gas foil bearing applied to a rotor of a compressor comprising an impeller with heavy aerodynamic load imposing additional dynamic forces to the gas foil bearings.

A gas foil bearing of the incipiently mentioned type for a centrifugal turbo blower is known from the patent application US 2010/0040493 A1.

It is therefore one object of the invention to improve the conventional gas foil bearing and to increase the capacity to cope with dynamic forces from the rotor especially at high speeds.

The invention provides a radial gas foil bearing of the incipiently mentioned type with the additional features of the characterizing portion of claim 1. The dependent claims comprise beneficial embodiments of the invention.

With regard to the invention the terms axial, radial and circumferential always refer to a rotational axis of a shaft to be supported by the radial gas foil bearing respectively an axis, which extends through the centre of the opening.

The carrier element according to the invention is a supporting part carrying the bump foil layer and the flat surface layer similar to a bearing journal. The carrier element is provided with an opening, through which the shaft of a rotor extends, wherein the carrier element supports the rotor by means of a bearing at this axial location. This opening is basically of a round cylindrical shape and the bump foil layer and the flat surface layer are mounted to the radial inner surface of this opening. The inner surface of the opening of the carrier element faces the centre of the opening, which is located on or near a rotational axis of the shaft of the rotor to be supported, which in most cases co-insides with the so called machine axis. The carrier element can be an annular part of one piece or with an axially extending split plane.

According to the design of conventional gas foil bearings the design according to the invention enables a significant improvement of the damping characteristics. While conventionally the damping characteristics were only influenced by different designs of the bump foil layer the damping features of a gas foil bearing were strictly limited. According to the invention it became possible to provide several bump foil layers in a radial serial order, which enlarges the scope of possible damping characteristics significantly. Further, the damping characteristics can be designed more independently from the elastic behaviour of the individual bump foil layer. According to the invention it therefore becomes possible to apply gas foil bearings for radial support in cases, where formerly a different bearing type would have been chosen.

A preferred embodiment of the radial gas foil bearing according to the invention provides a two-layer-system on the radial inner surface of the opening of the carrier element resulting in the following radial order from outside to the inside: a first bump foil layer, a first flat surface layer, a second bump foil layer and a second flat surface layer. All these layers are extending in a circumferential direction. Another preferred embodiment of the invention provides bump foil layers, which comprise several circumferentially extending stripes arranged axially next to each other. This design makes the gas foil bearing more adjustable to any static or dynamic misalignment of the shaft to be supported. The stiffness is reduced and the damping is improved by this partitioning of the bump foil layer.

A further preferred embodiment provides bump foil layers of different layer systems, which are identical. The identical bump foil layers can be designed such that the desired stiffness and damping characteristics are obtained by the combination of these bump foil layers and flat surface layers.

It is further beneficial, to fixedly connect the bump foil layers and the flat surface layers both to the carrier element at only one circumferential end, while the other circumferential end is not fixedly connected to the carrier element. This connection to the carrier element can preferably be provided at the leading end in circumferential direction with regard to the direction of rotation of the shaft. The connection of the layer systems to the carrier element can be done beneficially by welding at welding points or at a welding seam.

A preferred design of the radial gas foil bearing provides more than one segment to the 360° of circumference of the opening on the inner surface of the carrier element. The 360° circumference of the opening of the carrier element is that way divided into several segments. Preferably three segments are provided, wherein to each segment an angle of 120° is assigned. Each segment is preferably provided with more than one layer system extending from one circumferential end of the segment to the other circumferential end of the segment respectively.

A still further preferred embodiment of the invention provides a bump foil layer and/or a flat surface layer made of INCONEL. While INCONEL is only a registered trademark's name it is made predominantly of nickel, with chromium as a second element. Other metals made of predominantly nickel with chromium as a second element are suitable for the flat surface layer and/or the bump foil layer to be made of.

The above mentioned attributes and other features and advantages of this invention and the manner of attaining them will become more apparent and the invention itself will be better understood by reference to the following description of the currently best mode of carrying out the invention taken in conjunction with the accompanying drawings, wherein:
Figure 1 shows a three-dimensional radial gas foil bearing according to the invention and
Figure 2 shows a detail of figure 1.

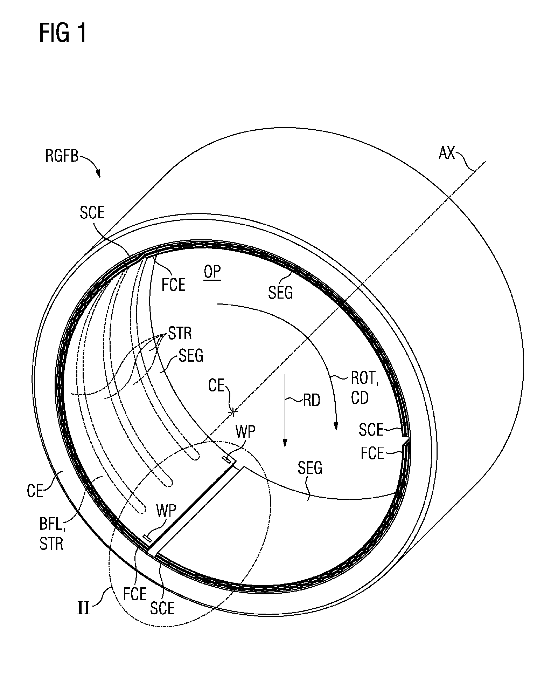

Figure 1 shows a radial gas foil bearing RGFB, comprising a carrier element CE provided with a basically round cylindrical opening OP. Through the centre of CE of the opening OP the centre axis AX extends, which co-insides with a rotational axis of a not shown shaft of a rotor to be supported by the radial gas foil bearing RGFB. The carrier element comprises an inner surface IS facing the centre CE of the opening OP. The inner surface IS is segmented in circumferential direction CD into three segments SEG of 120° respectively. Each of these segments SEG is provided with layer systems LS comprising bump foil layers BFL and flat surface layers FSL. The layer systems LS and the bump foil layers BFL and the flat surface layers FSL extend circumferentially along the inner surface IS and along the segment angle 120° from a first circumferential end FCE to a second circumferential end SCE. According to a direction of rotation ROT of the non-depicted shaft the first circumferential end is the leading end with regard to the direction of rotation ROT and the second circumferential end SCE is the trailing end. At the leading end respectively the first circumferential end FCE the layer systems LS are fixedly connected to the carrier elements CE by welding.

The bump foil layers BFL are made of axially adjacent stripes STR extending in the circumferential direction CD along the segments SEG angel of 120°. This is illustrated in Figure 1 by dotted lines symbolizing the hidden edges of the stripes STR. In such depicted manner four stripes STR are provided for each bump foil layer BFL arranged axially adjacent to each other.

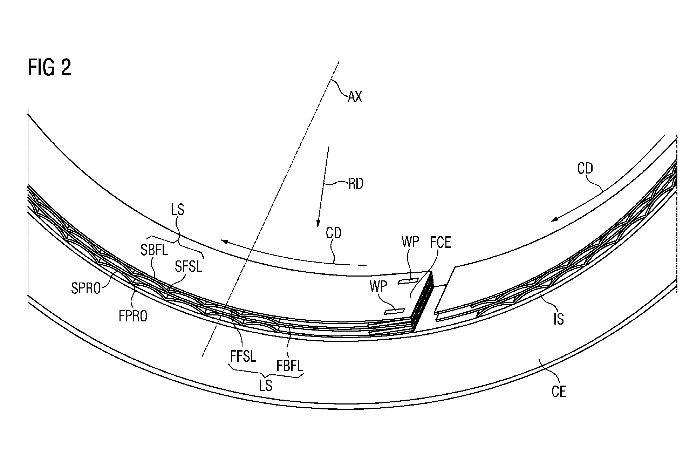

The structure of the layer systems is depicted in more detail in figure 2. The inner surface IS of the opening OP of the carrier element CE is provided in each segment SEG with two layer systems LS in radial serial order comprising a bump foil layer BFL and a flat surface layer FSL respectively. In radial order from outside to inside the two layer systems LS provide a first bump foil layer FBFL, a first flat surface layer FFSL, a second bump foil layer SBFL and a second flat surface layer SFSL. These two layer systems LS are fixedly connected to the carrier element CE at the first circumferential end FCE. This is done by means of two welding points WP.

The bump foil layers BFL are provided with first protrusions FPRO contacting the radial inner surface IF of the carrier elements CE respectively the radially inner adjacent member. In alternating order with the first protrusions FPRO, second protrusions SPRO provided in the bump foil layers BFL contacting the adjacent radially outer surface of the flat surface layer FSL. The second layer system numbered from radially outside to radially inside and the subsequent layer systems LS each contact adjacent flat surface layers FSL by the first and second protrusions FPRO, SPRO. When the bump foil layer BFL stripes STR are resiliently deformed they frictionally move along adjacent flat surfaces of the carrier elements CE respectively flat surface layer elements FSL and provide a damping.

## Claims

1. Radial gas foil bearing (RGFB) comprising a carrier element (CE) provided with a basically round opening (OP) for radially surrounding a shaft (SH) extending in an axial direction (AX) to be supported radially by the radial gas foil bearing (RGFB), wherein the opening (OP) comprises a basically circumferentially extending inner surface (IS) facing a radial centre (CE) of the opening (OP), which inner surface (IS) is provided with a layer system (LS) comprising a bump foil layer (BFL) and a flat surface layer (FSL) both layers (BFL, FSL) extending in a circumferential direction (CD) from a first circumferential end (FCE) to a second circumferential end (SCE), wherein the bump foil layer (BFL) is provided with first protrusions (FPRO) contacting the radially outwards adjacent element and second protrusions (SPRO) contacting a radially inwards adjacent element,
**characterized in that**
at least two layer systems (LS) are provided in serial order in radial direction (RD).

2. Radial gas foil bearing (RGFB) according to claim 1,
wherein two layer systems (LS) are provided on the radial inner surface (IS) of the carrier element in radial serial order, wherein the two layer systems (LS) comprise in radial serial order from outside to inside a first bump foil layer (FBFL), a first flat surface layer (FFSL), a second bump foil layer (SBFL) and the second flat surface layer (SFSL).

3. Radial gas foil bearing (RGFB) according to claim 1 or 2,
wherein the bump foil layer (BFL) comprises several circumferentially extending stripes (STR), which are arranged axially next to each other.

4. Radial gas foil bearing (RGFB) according to claim 3,
wherein four stripes (STR) are provided.

5. Radial gas foil bearing (RGFB), wherein at least two bump foil layers (BFL) of one layer system (LS) are identical.

6. Radial gas foil bearing (RGFB) according to at least one of the preceding claims,
wherein the bump foil layer (BFL) and/or the flat surface layers (FSL) are directly or indirectly fixed at a first circumferential end (FCE) to the carrier element (CE).

7. Radial gas foil bearing (RGFB) according to claim 1,
wherein the fixed connection to the carrier element (CE) of the components of the layer system (LS) is welded at a welding point (WP) or at a welding seam.

8. Radial gas foil bearing (RGFB) according to any of the preceding claims,
wherein 360° of the circumference of the opening (OP) is divided in several segments (SEG), wherein in each segment (SEG) the inner surface (IS) is provided with separate layer systems (LS).
